# EUROPEAN PATENT APPLICATION

(11) **EP 4 468 150 A1**
(43) Date of publication of application: **27.11.2024**
(21) Application number: 24165840.0
(22) Date of filing: 25.03.2024
(51) Int. Cl.: G06F 9/50, G06F 9/48

(54) **SOC-BASED TASK SCHEDULING METHOD, SOC, AND ELECTRONIC DEVICE**

(30) Priority: 24.05.2023 CN 202310594269; 28.06.2023 CN 202310780260
(71) Applicant: Beijing Horizon Information Technology Co., Ltd., Beijing 100094 (CN)
(72) Inventor: HU, Jianbing, BEIJING, 100094 (CN); ZHU, Jiaru, BEIJING, 100094 (CN); ZUO, Ruilin, BEIJING, 100094 (CN); WU, Yuan, BEIJING, 100094 (CN); PAN, Zheng, BEIJING, 100094 (CN); XIANG, Chong, BEIJING, 100094 (CN); YAO, Yu, BEIJING, 100094 (CN); YU, Hongmin, BEIJING, 100094 (CN)
(74) Representative: Kolster Oy Ab

(57) **Abstract**

Disclosed are a SOC-based task scheduling method, a SOC, and an electronic device. The task scheduling method includes: determining a task set to be executed by the SOC and dependency relationships between respective tasks in the task set; determining, based on the task set and the dependency relationships, first scheduling information for a first task executable by a first accelerator in the SOC; transmitting, by a first task scheduler in the SOC, the first scheduling information to a second task scheduler, in the SOC, that is configured to schedule the first accelerator; and scheduling the first accelerator by the second task scheduler based on the first scheduling information, and executing the first task by the first accelerator.

## Description

The present application claims priority to the Chinese Patent Application No. 202310594269.6 filed on May 24, 2023 and Chinese patent application No. 202310780260.4 filed on June 28, 2023.

### FIELD OF THE INVENTION

The present disclosure relates to the technical filed of computers, and in particular, to a SOC-based (System-On-Chip-based) task scheduling method, a SOC (System On Chip), a computer readable storage medium, and an electronic device.

### BACKGROUND OF THE INVENTION

In intelligent driving systems, with increasing complexity of application programs, granularity of data scheduling and task scheduling is becoming smaller, and demand for high-efficiency and low-latency task scheduling is becoming stronger. In related technologies, a processing manner in which tasks are scheduled and executed through software by a central processing unit (CPU) cannot meet requirements for high-efficiency and low-latency task scheduling.

### SUMMARY OF THE INVENTION

To resolve the foregoing technical problem, the present disclosure provides a SOC-based task scheduling method, a SOC, a computer readable storage medium, and an electronic device, and it is implemented that a processor executes a task by scheduling an accelerator through hardware scheduling. Because a speed of hardware scheduling is faster than that of software scheduling, use of the hardware scheduling manner may improve task scheduling efficiency, reduce task scheduling latency, and ensure real-time task scheduling, thereby ensuring that the task is executed efficiently with low latency.

According to a first aspect of the present disclosure, provided is a SOC-based (System-On-Chip-based) task scheduling method, including: determining a task set to be executed by the SOC and dependency relationships between respective tasks in the task set; determining, based on the task set and the dependency relationships, first scheduling information for a first task executable by a first accelerator in the SOC; transmitting, by a first task scheduler in the SOC, the first scheduling information to a second task scheduler, in the SOC, that is configured to schedule the first accelerator; and scheduling the first accelerator by the second task scheduler based on the first scheduling information, and executing the first task by the first accelerator.

According to a second aspect of the present disclosure, provided is a SOC, including: a processor, a first accelerator, a first task scheduler, and a second task scheduler, where the processor is coupled to the second task scheduler through the first task scheduler, and the second task scheduler is coupled to the first accelerator; the processor is configured to determine a task set to be executed by the SOC and dependency relationships between respective tasks in the task set; and to determine, based on the task set and the dependency relationships, initial scheduling information for a first task executable by the first accelerator; the first task scheduler is configured to determine first scheduling information for the first task based on the initial scheduling information, and transmit the first scheduling information to the second task scheduler configured to schedule the first accelerator; the second task scheduler is configured to schedule the first accelerator based on the first scheduling information; and the first accelerator is configured to execute the first task.

According to a third aspect of this disclose, provided is a computer readable storage medium, in which a computer program is stored, wherein the computer program is used for implementing the SOC-based task scheduling method according to any one of the foregoing items.

According to a fourth aspect of the present disclosure, provided is an electronic device. The electronic device includes: a processor; and a memory configured to store a processor-executable instruction. The processor is configured to read the instruction from the memory, and execute the instruction to implement the SOC-based task scheduling method according to any one of the foregoing items.

According to a fifth aspect of the present disclosure, provided is a computer program product. When instructions in the computer program product are executed by a processor to cause the processor to implement the SOC-based task scheduling method according to any one of the foregoing items of the present disclosure.

In the present disclosure, the second task scheduler in the SOC is scheduled by the first task scheduler in the SOC, and the first accelerator is scheduled by the second task scheduler to execute the first task. Task scheduling is performed by the first task scheduler and the second task scheduler, so that the processor schedules the first accelerator through hardware to execute the task, which may improve task scheduling efficiency, reduce task scheduling latency, and ensure real-time task scheduling, thereby ensuring that the task is executed efficiently with low latency. Moreover, during execution of each task in the task set, the accelerator is directly scheduled by a hardware scheduler to execute the task, without a main program being interrupted by the processor. In this way, frequency of processor interruptions is reduced and system processing performance is improved.

### BRIEF DESCRIPTION OF THE DRAWINGS

FIG. 1 is a schematic diagram of a structure of a SOC according to an exemplary embodiment of the present disclosure;
FIG. 2 is a schematic diagram of a structure of a SOC according to another exemplary embodiment of the present disclosure;
FIG. 3 is a schematic flowchart of a task scheduling method according to an exemplary embodiment of the present disclosure;
FIG. 4 is a schematic diagram of dependency relationships between tasks in a task set according to an exemplary embodiment of the present disclosure;
FIG. 5 is a schematic flowchart of a task scheduling method according to another exemplary embodiment of the present disclosure;
FIG. 6 is a schematic flowchart of a task scheduling method according to still another exemplary embodiment of the present disclosure;
FIG. 7 is a schematic diagram of composition of a data packet according to an exemplary embodiment of the present disclosure;
FIG. 8 is a schematic flowchart of a task scheduling method according to yet another exemplary embodiment of the present disclosure;
FIG. 9 is a schematic flowchart of a task scheduling method according to still yet another exemplary embodiment of the present disclosure;
FIG. 10 is a schematic flowchart of a task scheduling method according to a further exemplary embodiment of the present disclosure;
FIG. 11 is a schematic diagram of a structure of a SOC according to an exemplary embodiment of the present disclosure;
FIG. 12 is a schematic diagram of a structure of a SOC according to another exemplary embodiment of the present disclosure;
FIG. 13 is a schematic diagram of a structure of a first task scheduler according to an exemplary embodiment of the present disclosure;
FIG. 14 is a schematic diagram of a structure of a second task scheduler according to an exemplary embodiment of the present disclosure;
FIG. 15 is a schematic diagram of a structure of a third task scheduler according to an exemplary embodiment of the present disclosure;
FIG. 16 is a schematic diagram of a structure of a first task scheduler according to another exemplary embodiment of the present disclosure; and
FIG. 17 is a diagram of a structure of an electronic device according to an embodiment of the present disclosure.

### DETAILED DESCRIPTION OF THE EMBODIMENTS

To explain the present disclosure, exemplary embodiments of the present disclosure are described below in detail with reference to accompanying drawings. Obviously, the described embodiments are merely a part, rather than all of embodiments of the present disclosure. It should be understood that the present disclosure is not limited by the exemplary embodiments.

It should be noted that unless otherwise specified, the scope of the present disclosure is not limited by relative arrangement, numeric expressions, and numerical values of components and steps described in these embodiments.

### Application Overview

To ensure safety of intelligent driving, a chip of an intelligent driving assistance system needs to meet requirements for low-latency task scheduling and fast interruption processing. Hardware accelerators that may implement various specific functions are used to perform specific tasks. Different hardware accelerators may process data concurrently, having better processing capabilities and lower latency compared to CPUs. In related technologies, a hardware accelerator in a SOC is generally managed and scheduled by the CPU through software. When it is needed to schedule the hardware accelerator to execute a specific task, a main program being processed by the CPU is interrupted. After performing on-site protection, the CPU enters an interruption service and schedules the hardware accelerator to execute the task through software scheduling. After the task is completed, the CPU performs on-site recovery and continues to process the interrupted main program. When there are a lot of tasks, in order to ensure real-time scheduling of the task and avoid long wait time, usually a number of CPU cores may be increased to improve concurrency. Based on multi-kernel concurrent scheduling, real-time task scheduling is ensured, so as to improve task scheduling efficiency and reduce task scheduling latency.

However, with increasing functions implemented by the chip, granularity of task scheduling becomes smaller, and a number of tasks that need to be executed is increasing. In the related technologies, a scheduling manner in which the CPU schedules an accelerator through software to execute the task is adopted, and latency tends to be stabilized as the number of the CPU cores increases, but lower latency cannot be achieved, because the CPU needs to perform on-site protection and on-site recovery for each scheduling, which takes certain time. Even though there is no need to queue up during the scheduling, it takes hundreds of microseconds to execute the tasks. Therefore, for the scheduling manner of executing tasks by scheduling the accelerator through software in the related technologies, even though the number of the CPU cores is increased, the latency cannot be reduced to be less than 100 microseconds, which has certain impact on special scenarios having high requirements for real-time performance, such as intelligent driving. In addition, for the scheduling manner of executing tasks by scheduling the accelerator through software by the CPU in the related technologies, the CPU is interrupted every time the accelerator is scheduled as a number of tasks increases, and frequent interruptions may affect system processing performance.

To resolve the problems of low efficiency and high latency of task scheduling, embodiments of the present disclosure provide a SOC-based task scheduling method. According to this method, a plurality of task schedulers implemented based on hardware are disposed between the CPU and the hardware accelerator, so that the hardware accelerator may be scheduled through hardware scheduling to execute the tasks. In this way, the scheduling latency may be reduced to nanoseconds, thereby implementing high-efficiency and low-latency task scheduling, and ensuring real-time task scheduling. Moreover, during a process of scheduling the hardware accelerator by the task scheduler to execute respective tasks, schedule is performed directly among the plurality of task schedulers, without the main program being interrupted by the CPU. In this way, frequency of CPU interruptions is reduced, thereby indirectly improving system processing performance.

### Exemplary System

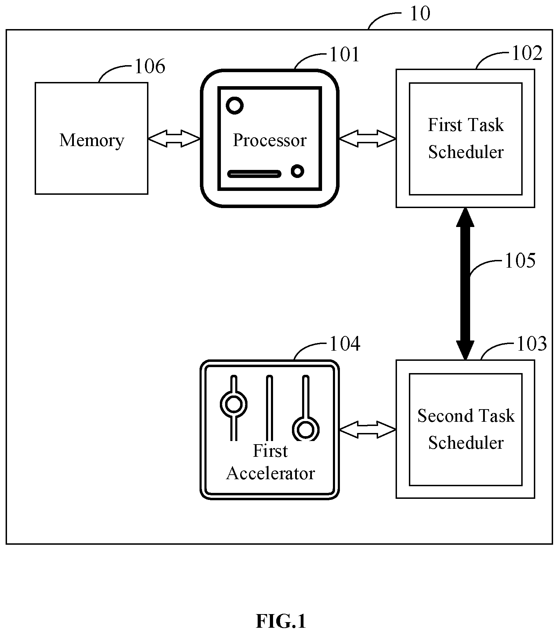

FIG. 1 is a schematic diagram of a structure of a SOC according to an exemplary embodiment of the present disclosure. As shown in FIG. 1, a SOC 10 includes a processor 101, a first task scheduler 102, a second task scheduler 103, a first accelerator 104, a scheduling bus 105, and a memory 106. The memory 106, the processor 101, the first task scheduler 102, the second task scheduler 103, and the first accelerator 104 are sequentially coupled. As shown in FIG. 1, the first task scheduler 102 may be coupled to the second task scheduler 103 by the dedicated scheduling bus 105.

The processor 101 may be a CPU, which is configured to determine a task set to be executed by the SOC 10 and dependency relationships between respective tasks in the task set; and to determine initial scheduling information for a first task based on the task set and the dependency relationship. The first task is a task executable by the first accelerator 104. In some examples, the first task is any task in the task set. The task set and the dependency relationships between the respective tasks in the task set may be pre-compiled by a compiler and may be stored in a memory, which may be read from the memory by the processor 101, when the task set needs to be executed.

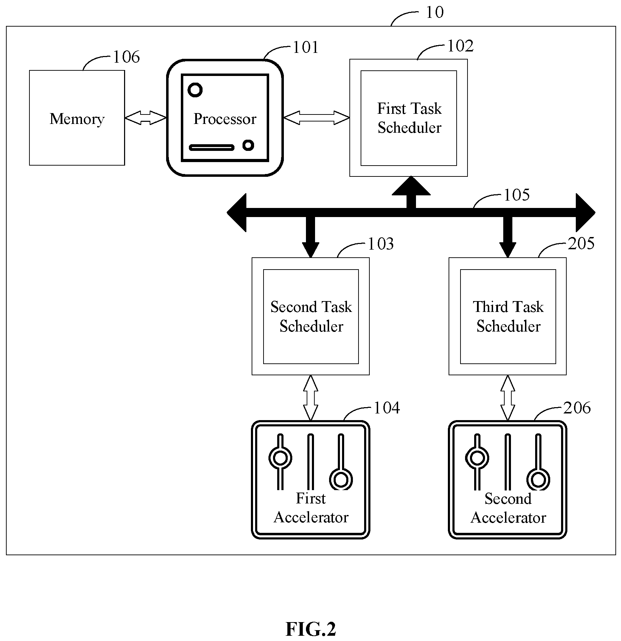

For example, the SOC 10 may include one or more second task schedulers 103. When the SOC 10 includes a plurality of second task schedulers 103, each one of the plurality of second task schedulers 103 is configured to schedule one of first accelerators 104. Numbers of second task schedulers 103 and first accelerators 104 included in the SOC 10 are not limited by the embodiments of the present disclosure. The SOC 10 includes one second task scheduler 103 and one first accelerator 104 is illustrated in FIG. 1 and FIG. 2 as an example.

The first task scheduler 102 has a scheduling function, and may schedule other task schedulers. In the embodiment of the present disclosure, the first task scheduler 102 is configured to determine first scheduling information for the first task based on the initial scheduling information, and schedule the second task scheduler 103 based on the first scheduling information.

The second task scheduler 103 has a scheduling function, and may schedule a hardware accelerator, so that the hardware accelerator is enabled to execute a particular task. In the embodiment of the present disclosure, the second task scheduler 103 is configured to receive the first scheduling information transmitted by the first task scheduler 102, and schedule the first accelerator 104 based on the first scheduling information.

The first accelerator 104 may be an artificial intelligence (AI) accelerator or a neural network processor (Intelligent Processing Unit, IPU), and may include hardware acceleration units such as a tensor processing unit (TPU) that may implement various specific computing functions. In the embodiment of the present disclosure, the first accelerator 104 is configured to execute the first task in response to the scheduling of the second task scheduler 103.

FIG. 2 is a schematic diagram of a structure of a SOC according to another exemplary embodiment of the present disclosure. As shown in FIG. 2, on the basis of the SOC 10 shown in FIG. 1, the SOC 10 further includes a third task scheduler 205 and a second accelerator 206. The third task scheduler 205 is coupled to the first task scheduler 102, the second task scheduler 103, and the second accelerator 206, respectively. In some examples, the first task scheduler 102, the second task scheduler 103, and the third task scheduler 205 may be coupled to each other by the dedicated scheduling bus 105.

The processor 101 is further configured to determine initial scheduling information for a second task based on the task set and the dependency relationship. The second task is a task executable by the second accelerator 206.

The first task scheduler 102 is configured to determine second scheduling information for the second task based on the initial scheduling information for the second task, and transmit the second scheduling information to the third task scheduler 205. For example, the second task is a task in the task set, which has a dependency relationship with the first task. For example, the second task is a consequent task for the first task. In other words, execution of the second task is dependent on an execution result for the first task.

The second task scheduler 103 is further configured to determine the execution result for the first task, generate third scheduling information based on the execution result and the first scheduling information for the first task, and transmit the third scheduling information to the third task scheduler 205.

The third task scheduler 205 is configured to receive the second scheduling information transmitted by the first task scheduler 102, receive the third scheduling information transmitted by the second task scheduler 103, and schedule the second accelerator 206 based on the second scheduling information and the third scheduling information.

The second accelerator 206 is configured to execute the second task in response to the scheduling of the third task scheduler 205.

For example, the SOC 10 may include one or more third task schedulers 205. When the SOC 10 includes a plurality of third task schedulers 205, each one of the plurality of third task schedulers 205 is configured to schedule one of second accelerators 206. Numbers of third task schedulers 205 and second accelerators 206 included in the SOC 10 are not limited by the embodiment of the present disclosure. The SOC 10 includes one third task scheduler 205 and one second accelerator 206 is illustrated in FIG. 2 as an example.

It should be noted that a specific structure of the SOC 10 is not limited by the embodiment of the present disclosure. The SOC 10 may include more or fewer components than those shown in FIG. 1 and FIG. 2. For example, the SOC 10 may further include a configuration bus, an input/output interface, and other components.

### Exemplary Method

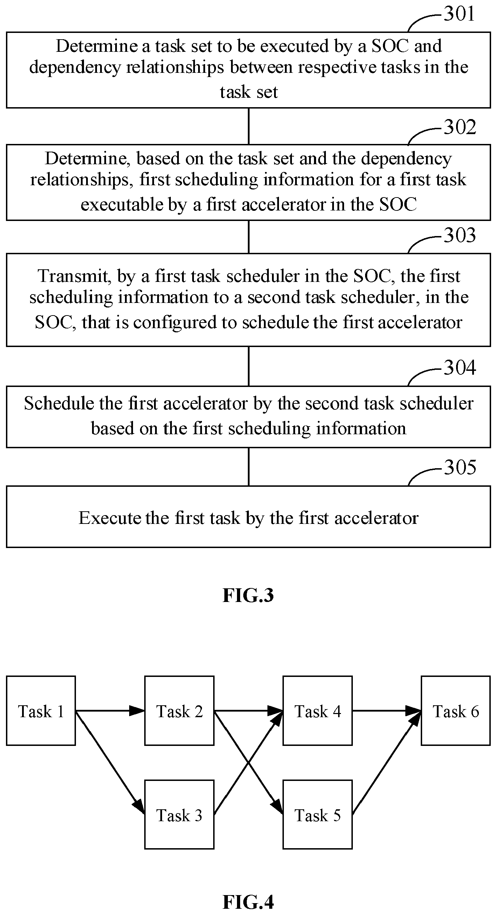

FIG. 3 is a schematic flowchart of a task scheduling method according to an exemplary embodiment of the present disclosure. The task scheduling method provided in the embodiment of the present disclosure may be applied to a SOC 10 shown in FIG. 1. As shown in FIG. 3, the method includes Step 301 to Step 305.

Step 301. Determine a task set to be executed by a SOC and dependency relationships between respective tasks in the task set.

In the embodiment of the present disclosure, the respective tasks in the task set may include, but are not limited to an image processing task, an audio processing task, and a data operation task. The dependency relationships indicate an execution sequence of the respective tasks in the task set. The task set and the dependency relationships between the respective tasks in the task set may be pre-compiled by a compiler and may be stored in a memory of the SOC. For example, the dependency relationships between the respective tasks may be stored in the memory by means of a sequence or a link. When it is needed to execute the respective tasks in the task set, the processor in the SOC reads the respective tasks and the dependency relationships between the respective tasks from the memory.

For example, FIG. 4 is a schematic diagram of dependency relationships between tasks in a task set according to an exemplary embodiment of the present disclosure. As shown in FIG. 4, there are dependency relationships between a task 1 and tasks 2 and 3; there are dependency relationships between the task 2 and tasks 1, 4 and 5; there are dependency relationships between the task 3 and the tasks 1 and 4; there are dependency relationships between the task 4 and the tasks 2, 3 and 6; there are dependency relationships between the task 5 and the tasks 2 and 6; and there are dependency relationships between the task 6 and the tasks 4 and 5. During a task scheduling process, the task 2 and the task 3 are triggered after the task 1 is completed; the task 4 and the task 5 are triggered after the task 2 is completed; the task 4 is triggered after the task 3 is completed; the task 6 is triggered after the task 4 is completed; and the task 6 is triggered after the task 5 is completed. Execution of the task 4 may be started only when the task 4 meets both of triggering conditions from the task 2 and the task 3, and execution of the task 6 may be started only when the task 6 meets both of triggering conditions from the task 4 and the task 5.

Step 302. Determine, based on the task set and the dependency relationships, first scheduling information for a first task executable by a first accelerator in the SOC.

An accelerator in the SOC is a hardware module that may perform a particular task. In the embodiment of the present disclosure, the first task is a task in the task set to be executed by the accelerator. After obtaining the task set, the processor first determines the first task to be executed by the accelerator from the task set, where the accelerator for executing the first task is the first accelerator; subsequently, determines initial scheduling information for the first task based on the dependency relationships; and schedules a first task scheduler based on the initial scheduling information. The first task scheduler determines the first scheduling information for the first task based on the initial scheduling information.

The first task is a task executable by the first accelerator, including but not limited to at least one of the following tasks: an image processing task, an audio processing task, and a data operation task. The first accelerator corresponding to the first task may include, but is not limited to: an image processing accelerator, an audio processing accelerator, and a data operation accelerator. When the first task is the image processing task, the first accelerator is an accelerator that may execute the image processing task. When the first task is the data operation task, the first accelerator is an accelerator that may perform the data operation task.

As shown in FIG. 4, the task set including {the task 1, the task 2, the task 3, the task 4, the task 5, and the task 6} is used as an example. The task 1, the task 2, the task 4, the task 5, and the task 6 may be tasks executable by respective accelerators in the SOC, while the task 3 is a special task inexecutable by the accelerator and to be executed by the processor. For example, when all accelerators in the SOC are unable to process an image in a special format, a CPU is required to execute the task 3, so as to process the image in the special format.

During implementation, the first scheduling information for the first task currently to be executed may be determined first. When another first task in the task set is to be executed, the first scheduling information for the another first task is determined in a real-time manner. Alternatively, the first scheduling information for all first tasks in the task set may be determined at once. When a certain first task is to be executed, the previously determined first scheduling information for this first task may be used directly, without determining for multiple times. For example, for the determining of the first scheduling information for the first task executable by the first accelerator, it is possible to determine only the first scheduling information for the first task currently to be executed (such as the task 1), or it is also possible to determine the first scheduling information for each of the first tasks to be executed (including the task 1, the task 2, the task 4, the task 5, and the task 6).

In the embodiment of the present disclosure, the first scheduling information for the first task may be determined based on dependency relationships related to the first task. The dependency relationships include an active dependency and a passive dependency. A task on which execution of the first task is in dependency is referred to as an antecedent task for the first task, and a task, execution of which is in dependency on the first task, is referred to as a consequent task for the first task. The first scheduling information for the first task involves at least the antecedent task for the first task and the consequent task for the first task. When the first task may be executed without depending on another task in the task set, the antecedent task for the first task is empty and is marked as null. In this case, the first task is scheduled and started by a main program executed by the processor. When no tasks in the task set is in dependency on the first task, the consequent task for the first task is empty and is marked as null. In this case, after the first task is completed, it is returned to the main program executed by the processor.

For example, in the task set shown in FIG. 4, first scheduling information for the task 1 may include {null} and {task 2 and task 3}; first scheduling information for the task 2 may include {task 1} and {task 4 and task 5}; and first scheduling information for the task 6 may include {task 4 and task 5} and {null}. In the first scheduling information as described above, a first set includes all antecedent tasks for the first task (if the antecedent task is empty, it is marked as null), and a second set includes all consequent tasks for the first task (if the consequent task is empty, it is marked as null).

Step 303. Transmit, by a first task scheduler in the SOC, the first scheduling information to a second task scheduler, in the SOC, that is configured to schedule the first accelerator.

After determining the first scheduling information for the first task, the first task scheduler may transmit the first scheduling information to the second task scheduler through a scheduling bus in SOC. The first task scheduler is a hardware scheduler, in the SOC, that is configured to schedule the second task scheduler. The second task scheduler is a hardware scheduler, in the SOC, that is configured to schedule the first accelerator. The first accelerator is an accelerator capable of executing the first task. In the embodiment of the present disclosure, hardware scheduling may be performed directly between the first task scheduler and the second task scheduler that are coupled through the scheduling bus.

Step 304. Schedule the first accelerator by the second task scheduler based on the first scheduling information.

After receiving the first scheduling information, the second task scheduler schedules the first accelerator based on the first scheduling information. During scheduling, if the antecedent task for the first task is empty, the second task scheduler directly schedules the first accelerator based on the first scheduling information. If the antecedent task for the first task is not empty, the second task scheduler further needs to obtain an execution result for the antecedent task for the first task, and schedules the first accelerator based on the first scheduling information and the execution result for the antecedent task for the first task.

It is taken as an example that the task 1 is executed by an accelerator 1 and the task 2 is executed by an accelerator 2. When the first task is the task 1, the second task scheduler schedules the accelerator 1 based on the first scheduling information for the task 1. When the first task is the task 2, the second task scheduler determines an execution result for the task 1 based on the first scheduling information for the task 1, and then schedules the accelerator 2 based on the execution result for the task 1 and the first scheduling information for the task 2.

In the embodiment of the present disclosure, the first task scheduler and the second task scheduler are hardware modules that are disposed in the SOC and may implement scheduling functions. During task scheduling, the first task scheduler is firstly scheduled by the processor, and then the second task scheduler is scheduled by the first task scheduler, and finally, the first accelerator is scheduled by the second task scheduler. In this way, it is implemented that the first accelerator is scheduled by the processor through hardware.

Step 305. Execute the first task by the first accelerator.

The first accelerator reads operation data for executing the first task from the memory based on configuration information determined by the second task scheduler, and performs an operation to obtain the execution result for the first task. In some examples, after completing the first task, the first accelerator may transmit the execution result for the first task back to the second task scheduler, so that the second task scheduler continues a scheduling and execution process for a next first task to be executed based on the execution result for the first task.

According to the task scheduling method in the embodiment of the present disclosure, the processor schedules the first accelerator by the first task scheduler and the second task scheduler to execute the first task. The first task scheduler and the second task scheduler are hardware modules that are disposed in the SOC and may implement scheduling functions. The processor performs task scheduling through hardware, which may improve task scheduling efficiency, reduce task scheduling latency, and ensure real-time task scheduling, thereby ensuring that the task is executed efficiently with low latency. Moreover, scheduling may be performed directly between the first task scheduler and the second task scheduler, without the main program in processing being interrupted by the processor during the scheduling. In this way, frequency of processor interruptions is reduced and system processing performance is indirectly improved.

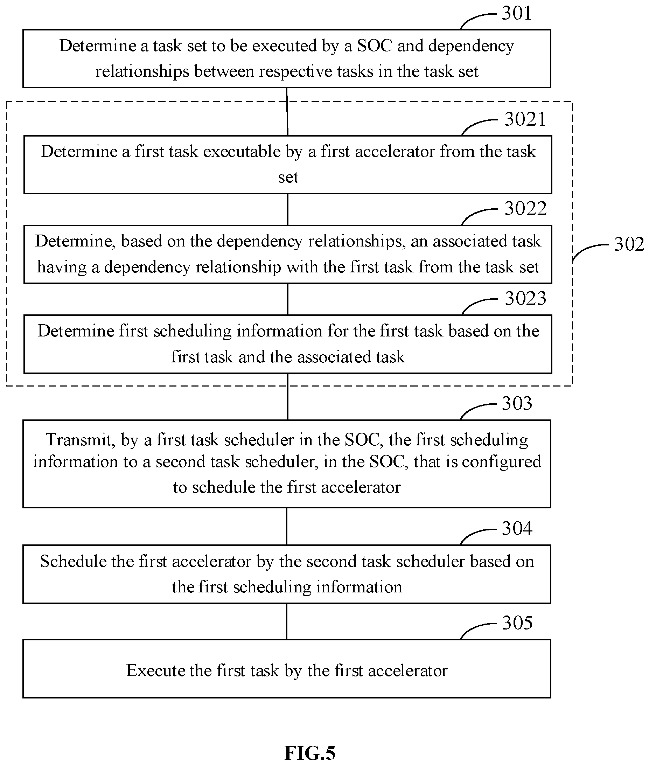

In some examples, Step 302 of "determining, based on the task set and the dependency relationships, the first scheduling information for the first task executable by the first accelerator in the SOC" in the embodiment shown in FIG. 3 may be performed through Steps 3021 to 3023 shown in FIG. 5.

Step 3021. Determine the first task executable by the first accelerator from the task set.

The processor first screens out tasks, from the task set, executable by the accelerator in the SOC, as first tasks, which are executed by the first accelerator.

For example, in the task set shown in FIG. 4, if the task 1, the task 2, the task 4, the task 5, and the task 6 are tasks executable by the accelerator in the SOC, the task 1, the task 2, the task 4, the task 5, and the task 6 are all first tasks.

Step 3022. Determine, based on the dependency relationships, an associated task having a dependency relationship with the first task from the task set.

Based on the dependency relationships, the processor screens out tasks having dependency relationships with the first task from the tasks included in the task set, to serve as associated tasks of the first task. The associated tasks of the first task include the antecedent task for the first task and the consequent task for the first task.

In the task set shown in FIG. 4, an antecedent task for the task 1 is empty, and consequent tasks for the task 1 include the task 2 and the task 3. Therefore, associated tasks in the task set that have dependency relationships with the task 1 include the task 2 and the task 3. For another example, antecedent tasks for the task 4 include the task 2 and the task 3, and consequent tasks for the task 4 include the task 6. Therefore, associated tasks in the task set that have dependency relationships with the task 4 include the task 2, the task 3, and the task 6.

Step 3023. Determine the first scheduling information for the first task based on the first task and the associated task.

The first scheduling information for the first task includes at least the antecedent task for the first task and the consequent task for the first task. The first scheduling information may be used to determine whether the first task meets a task execution condition (which is also referred to as a triggering condition), and may also be used to determine the consequent tasks for the first task. In this way, based on these consequent tasks, it is determined that the execution result for the first task needs to be transmitted to a corresponding task scheduler.

It is taken as an example that the first task is the task 1. The task 2 and the task 3 have dependency relationships with the task 1, and the first scheduling information for the task 1 may include {null} and {task 2 and task 3}. Based on the first scheduling information for the task 1, it is determined that the antecedent task for the task 1 is empty, and it is directly determined that the task 1 meets the task execution condition. After the task 1 is completed, it is determined based on the first scheduling information for the task 1 that the execution result for the task 1 needs to be transmitted to a task scheduler corresponding to the task 2 and to a task scheduler corresponding to the task 3.

It is taken as another example that the first task is the task 4. The task 2, the task 3, and the task 6 have dependency relationships with the task 4, and first scheduling information for the task 4 may include {task 2 and task 3} and {task 6}. Based on the first scheduling information for the task 4, it is determined that the antecedent tasks for the task 4 include the task 2 and the task 3, and a determination may be performed on whether execution results for the task 2 and the task 3 have been received. If both the execution results for the task 2 and the task 3 have been received, it is determined that the task 4 meets the task execution condition. After the task 4 is completed, it is determined based on the first scheduling information for the task 4 that an execution result for the task 4 needs to be transmitted to a task scheduler corresponding to the task 6.

In the embodiment of the present disclosure, the task scheduler determines whether the first task meets the triggering condition based on the first scheduling information, and determines that the execution result for the first task needs to be transmitted to a corresponding scheduler for next-stage task. Implementing direct scheduling between the task schedulers through the first scheduling information may reduce a number of processor interruptions, thereby indirectly improving system processing performance.

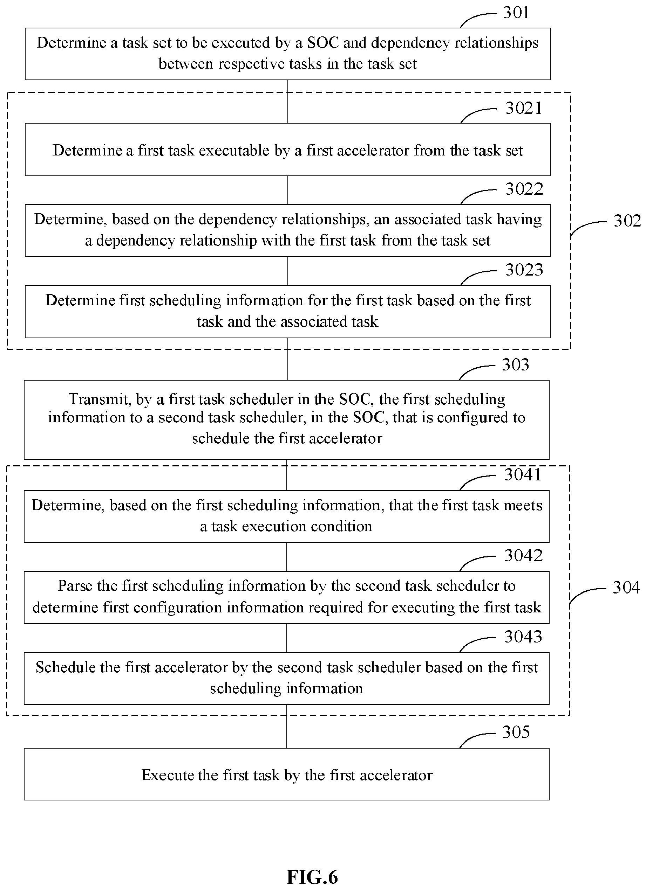

In some examples, as shown in FIG. 6, Step 304 of "schedule the first accelerator by the second task scheduler based on the first scheduling information" in the embodiment shown in FIG. 3 may include Steps 3041 to 3043.

Step 3041. Determine, based on the first scheduling information, that the first task meets a task execution condition.

When receiving the first scheduling information transmitted by the first task scheduler, the second task scheduler may determine, based on the first scheduling information, whether execution of the first task may be triggered. When it is determined based on the first scheduling information that all the antecedent tasks for the first task have been executed, or when it is determined based on the first scheduling information that the antecedent task for the first task is empty, it is determined that the first task meets the task execution condition, and proceeding to Step 3042 to trigger the execution of the first task. Otherwise, it is determined that the first task does not meet the task execution condition.

Step 3042. Parse the first scheduling information by the second task scheduler to determine first configuration information required for executing the first task.

In addition to the antecedent task for the first task and the consequent task for the first task, the first scheduling information for the first task further includes information required for executing the first task. After receiving the first scheduling information, the second task scheduler parses the first scheduling information to obtain a parameter and a task type required for executing the first task. The parameter required for executing the first task is configured based on the task type, to obtain the first configuration information.

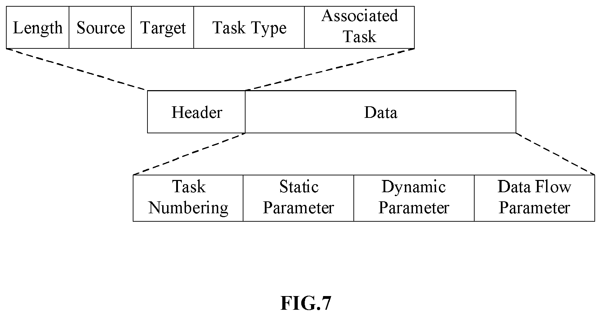

In some examples, the first task scheduler may transfer the first scheduling information by means of a data packet. FIG. 7 is a schematic diagram of composition of a data packet according to an exemplary embodiment of the present disclosure. As shown in FIG. 7, a data packet corresponding to the first scheduling information includes a header section and a data section. The header section includes a length, a source, a target, a task type, and the associated task. The data section includes a task numbering, a static parameter, a dynamic parameter, and a data flow parameter. The second task scheduler determines the first configuration information based on the task type, the static parameter, and the dynamic parameter.

In the header section of the data packet corresponding to the first scheduling information, the length is an overall data length of the data packet; the source indicates an address of the first task scheduler, the target indicates an address of the second task scheduler, and the source and the target respectively represent a transmitting partty and a receiving party of the first scheduling information; the task type indicates a type of a task to be executed, and is used for initializing the first configuration information; and associated tasks include an antecedent task and a consequent task. In the data section of the data packet corresponding to the first scheduling information, the task numbering is a numbering of a task in the task set; the static parameter indicates a storage address of static operation data required for executing the task; the dynamic parameter indicates a storage address of dynamic operation data required for executing the task; and the data flow parameter represents relevant data flow information corresponding to the task, such as a timestamp. For example, during processing of a plurality frames of images, the timestamp may be used to determine which frame of image is being processed.

Step 3043. Schedule the first accelerator by the second task scheduler based on the first configuration information.

The first accelerator receives the first configuration information transmitted by the second task scheduler, and performs an operation based on this first configuration information to output an operation result. The operation result is an execution result obtained by the first accelerator when executing the first task. For example, the first configuration information may include a storage address of the operation data required for executing the first task in the memory. The first accelerator reads the operation data from the memory based on the storage address included in the first configuration information, and performs an operation to obtain the operation result.

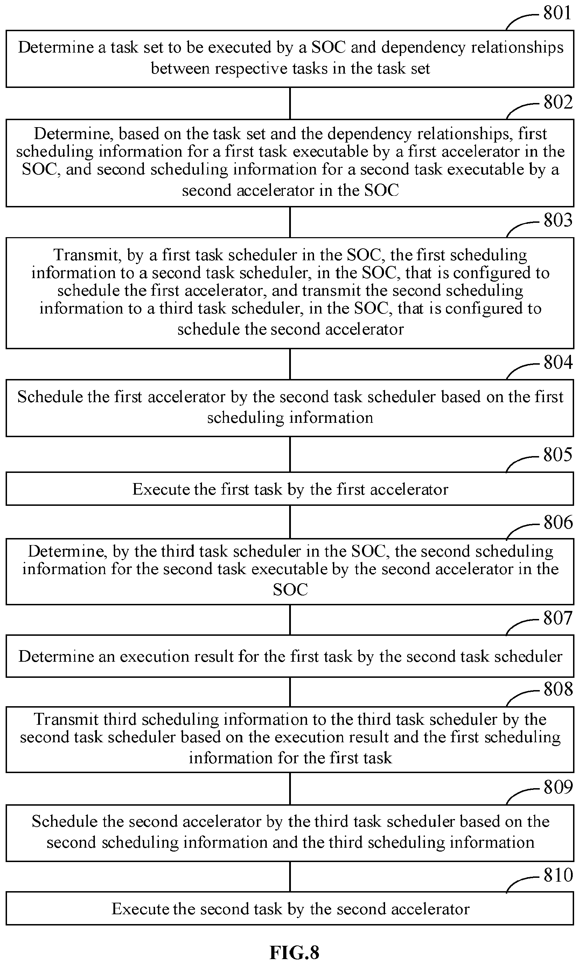

In some examples, there may be one second task scheduler in the SOC, and the first accelerators corresponding to the respective first tasks are scheduled by the second task scheduler to execute the respective first tasks. Alternatively, there may be a plurality of second task schedulers. The scheduling may be performed directly among the plurality of second task schedulers, and accelerators corresponding to the respective tasks are scheduled by the respective task schedulers. Description is made below by an example of two second task schedulers. For distinction, one of the second task schedulers is referred to as a third task scheduler, an accelerator scheduled by the third task scheduler is referred to as a second accelerator, and a task executed by the second accelerator is referred to as a second task. FIG. 8 is a schematic flowchart of a task scheduling method according to yet another exemplary embodiment of the present disclosure. The task scheduling method provided in the embodiment of the present disclosure may be applied to the SOC 10 shown in FIG. 2. As shown in FIG. 8, the method includes the following steps.

Step 801. Determine a task set to be executed by a SOC and dependency relationships between respective tasks in the task set.

When a main program processed by a processor in the SOC needs to execute the respective tasks in the task set, the processor may read the respective tasks and the dependency relationships between the respective tasks from a memory in the SOC. The task set and the dependency relationships between the respective tasks in the task set that are stored in the memory may be pre-compiled by a compiler and be stored in the memory.

Step 802. Determine, based on the task set and the dependency relationships, first scheduling information for a first task executable by a first accelerator in the SOC, and second scheduling information for a second task executable by a second accelerator in the SOC.

In some examples, for an implementation manner of determining, based on the task set and the dependency relationships, the first scheduling information for the first task executable by the first accelerator in the SOC in Step 802, reference may be made to the foregoing Step 302, and details are not described herein again.

As an example, the second task as mentioned above may be a next task for the first task. An implementation manner of determining the second scheduling information for the second task based on the task set and the dependency relationships is similar to the manner of determining the first scheduling information. For example, determining the second scheduling information for the second task based on the task set and the dependency relationships includes: determining an associated task having a dependency relationship with the second task from the task set based on the dependency relationships; determining initial scheduling information for the second task based on the second task and the associated task of the second task; and determining the second scheduling information for the second task based on the initial scheduling information for the second task by a first task scheduler.

As shown in FIG. 4, the processor determines that the first task is a task 2 from the task set {task 1, task 2, task 3, task 4, task 5, and task 6}; and based on the dependency relationships, determines that associated tasks of the task 2 include the task 1, the task 4, and the task 5, and determines initial scheduling information for the task 2. In a data packet corresponding to the initial scheduling information for the task 2, a source indicates the processor, a target indicates the first task scheduler, associated tasks include {task 1} and {task 4 and task 5}, a task numbering indicates task 2, and a static parameter is a storage address of static operation data required for executing the task 2 in the memory. The processor transfers the initial scheduling information to a configuration bus. When it is determined by the first task scheduler that the target in the initial scheduling information for the task 2 matches with the first task scheduler, the first task scheduler receives the initial scheduling information for the task 2, and generates first scheduling information for the task 2 based on the initial scheduling information for the task 2. In a data packet corresponding to the first scheduling information for the task 2, a source indicates the first task scheduler, a target indicates a second task scheduler, associated tasks include {task 1} and {task 4 and task 5}, a task numbering indicates task 2, and a static parameter is a storage address of static operation data required for executing the task 2 in the memory.

Based on the associated tasks of the task 2, it is determined that next tasks for the task 2 include the task 4 and the task 5; based on the dependency relationships, it is determined that associated tasks of the task 4 include {task 2 and task 3} and {task 6}, and it is determined that associated tasks of the task 5 include {task 2} and {task 6}; and initial scheduling information for the task 4 is determined based on the task 4 and the associated tasks of the task 4. In a data packet corresponding to the initial scheduling information for the task 4, a source indicates the processor, a target indicates the first task scheduler, associated tasks include {task 2 and task 3} and {task 6}, a task numbering indicates task 4, and a static parameter is a storage address of static operation data required for executing the task 4 in the memory. The processor transfers the initial scheduling information to the configuration bus. When it is determined by the first task scheduler that the target in the initial scheduling information for the task 4 matches with the first task scheduler, the first task scheduler receives the initial scheduling information for the task 4, and generates second scheduling information for the task 4 based on the initial scheduling information for the task 4. In a data packet corresponding to the second scheduling information for the task 4, a source indicates the first task scheduler, a target indicates the third task scheduler, associated tasks include {task 2 and task 3} and {task 6}, a task numbering indicates task 4, and a static parameter is a storage address of static operation data required for executing the task 4 in the memory.

In some embodiments, if other tasks are further included in the task set after the second task, scheduling information for the other tasks may also be determined in Step 802 based on the task set and the dependency relationships.

Step 803. Transmit, by a first task scheduler in the SOC, the first scheduling information to a second task scheduler, in the SOC, that is configured to schedule the first accelerator, and transmit the second scheduling information to a third task scheduler, in the SOC, that is configured to schedule the second accelerator.

In an implementation, the first task scheduler may transfer the first scheduling information and the second scheduling information to a dedicated scheduling bus. Each task scheduler coupled to the scheduling bus determines, based on a target in corresponding scheduling information, whether of the corresponding scheduling information is information for being transferred to the task scheduler. When the target in the scheduling information matches with the task scheduler, the scheduling information is received. The second task scheduler receives the first scheduling information, and the third task scheduler receives the second scheduling information.

Step 804. Schedule the first accelerator by the second task scheduler based on the first scheduling information.

Step 805. Execute the first task by the first accelerator.

In the embodiment of the present disclosure, the first task scheduler and the second task scheduler are hardware modules that are disposed in the SOC and may implement scheduling functions. The processor schedules the first accelerator by the first task scheduler and the second task scheduler, and it is implemented that the processor schedules the accelerator through hardware.

Step 806. Determine, by the third task scheduler in the SOC, the second scheduling information for the second task executable by the second accelerator in the SOC.

In the embodiment of the present disclosure, the third task scheduler is configured to schedule the second accelerator. The third task scheduler receives the second scheduling information that is transferred by the first task scheduler through the scheduling bus.

Step 807. Determine an execution result for the first task by the second task scheduler.

After completing the first task, the first accelerator transmits the execution result for the first task back to the second task scheduler.

Step 808. Transmit third scheduling information to the third task scheduler by the second task scheduler based on the execution result and the first scheduling information for the first task.

The second task scheduler determines, based on a consequent task in the first scheduling information, that the execution result for the first task needs to be transferred to the third task scheduler corresponding to the second task. The third scheduling information to be transferred to the third task scheduler is generated based on the execution result and the first scheduling information for the first task. In a data packet corresponding to the third scheduling information, a source indicates the second task scheduler, a target indicates the third task scheduler, a task numbering indicates task 4, and a dynamic parameter is a storage address of dynamic operation data required for executing the task 4 in the memory. The dynamic operation data is the execution result for the first task.

Step 809. Schedule the second accelerator by the third task scheduler based on the second scheduling information and the third scheduling information.

The third task scheduler determines, based on the second scheduling information, a static parameter and a task type that are required for executing the task 4; and determines, based on the third scheduling information, a dynamic parameter required for executing the task 4. According to the task type, the static parameter and the dynamic parameter are configured to obtain configuration information for the second task. Based on the configuration information for the second task, the second accelerator is scheduled to execute the second task.

Step 810. Execute the second task by the second accelerator.

In the embodiment of the present disclosure, after the second task is completed, if other tasks are further included in the task set after the second task, and these other tasks are tasks executable by the accelerator in the SOC, these other tasks may be scheduled and executed with reference to the foregoing steps, until all tasks in the task set are executed. In this way, all the tasks in the task set are scheduled and executed.

According to the task scheduling method provided in the embodiment of the present disclosure, the first task scheduler, the second task scheduler, and the third task scheduler are hardware modules that are disposed in the SOC and may implement scheduling functions. The first task scheduler may schedule the second task scheduler and the third task scheduler, the second task scheduler may schedule the first accelerator and the third task scheduler, and the third task scheduler may schedule the second accelerator. The processor schedules a plurality of accelerators by a plurality of task schedulers, which may improve task scheduling efficiency, reduce task scheduling latency, and ensure real-time task scheduling, thereby ensuring that the task is executed efficiently with low latency. Moreover, during execution of each task in the task set, respective accelerators may be directly scheduled. The accelerator is directly scheduled by a hardware scheduler to execute the task, without the main grogram being interrupted by the processor. In this way, frequency of processor interruptions is reduced and system processing performance is indirectly improved.

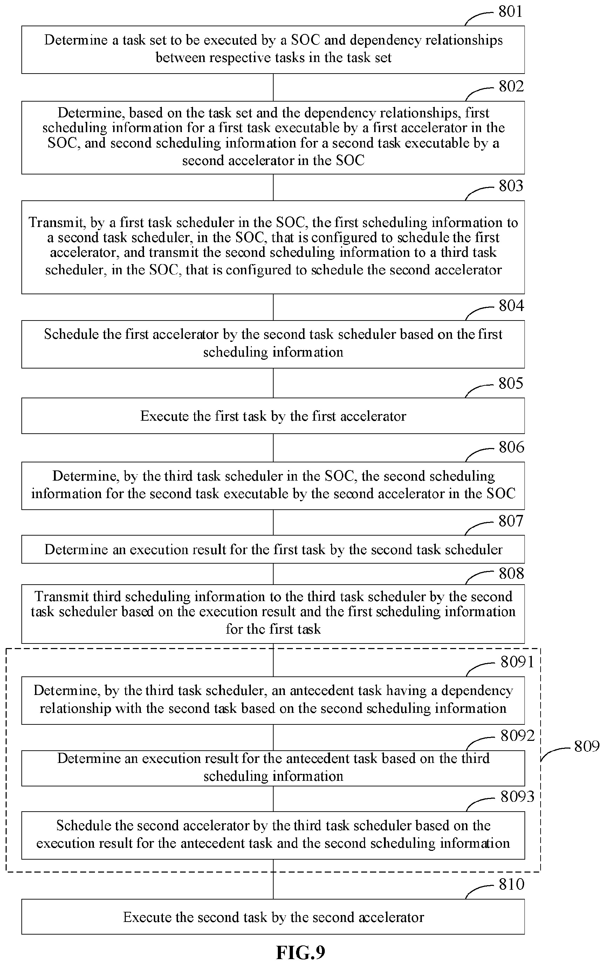

In some examples, as shown in FIG. 9, Step 809 of "scheduling the second accelerator by the third task scheduler based on the second scheduling information and the third scheduling information" in the embodiment shown in FIG. 8 may include the following steps.

Step 8091. Determine, by the third task scheduler, an antecedent task having a dependency relationship with the second task based on the second scheduling information.

It is taken as an example that the second task is the task 4 in the task set shown in FIG. 4. The second task has a dependent antecedent task, that is, the antecedent task for the task 4. Based on the second scheduling information for the task 4, the third task scheduler determines that the antecedent tasks for the task 4 include the task 2 and the task 3.

Step 8092. Determine an execution result for the antecedent task based on the third scheduling information.

The third task scheduler receives a data packet, from the scheduling bus, corresponding to the third scheduling information having a target indicating the third task scheduler, and analyzes the data packet to obtain the execution result for the antecedent task for the second task. A number of the received third scheduling information is equal to that of the antecedent tasks for the second task. For example, there are two antecedent tasks for the task 4. In this case, the third scheduling information transmitted by task schedulers corresponding to the two antecedent tasks needs to be received. The third task scheduler receives the third scheduling information transmitted by the second task scheduler from the scheduling bus. The third scheduling information carries the execution result for the task 2. The third task scheduler receives the third scheduling information transmitted by the first task scheduler from the scheduling bus. The third scheduling information carries the execution result for the task 3.

When the antecedent tasks for the second task include only tasks executable by the accelerator, the third scheduling information is transferred to the scheduling bus by the second task scheduler configured to schedule the accelerator. In this case, the third task scheduler is scheduled by the second task scheduler. When the antecedent tasks for the second task include only special tasks inexecutable by the accelerators, the third scheduling information is transferred to the scheduling bus by the first task scheduler configured to schedule the processor. In this case, the third task scheduler is scheduled by the first task scheduler. When the antecedent tasks for the second task include the tasks executable by the accelerators, and also include the special tasks inexecutable by the accelerators, the third scheduling information includes information transferred to the scheduling bus by the second task scheduler configured to schedule the accelerator, and also includes information transferred to the scheduling bus by the first task scheduler configured to schedule the processor. In this case, the third task scheduler is scheduled by the first task scheduler and the second task scheduler.

Step 8093. Schedule the second accelerator by the third task scheduler based on the execution result for the antecedent task and the second scheduling information.

After execution results for all antecedent tasks for the second task and the second scheduling information are obtained, it is determined that the second task meets a task execution condition. Subsequently, the second scheduling information is parsed by the third task scheduler to determine second configuration information required for executing the second task; and the second accelerator is scheduled by the third task scheduler based on the execution result for the antecedent task and the second configuration information.

In addition to the antecedent tasks for the second task and a consequent task for the second task, the second scheduling information for the second task further includes second configuration information required for executing the second task. After receiving the second scheduling information transferred by the first task scheduler, the third task scheduler parses the second scheduling information to obtain the second configuration information required for executing the second task. The second configuration information may include a storage address of static operation data required for executing the second task in the memory, according to which the static operation data of the second task may be read. The execution result for the antecedent task for the second task is a dynamic parameter of the second task. The third task scheduler determines the configuration information required for executing the second task based on the task type, the static parameter, and the dynamic parameter in the second scheduling information; and transmits the configuration information to the second accelerator to schedule the second accelerator to execute the second task.

After receiving the configuration information required for executing the second task, the second accelerator performs an operation based on the configuration information and outputs an operation result. The operation result is an execution result obtained by the second accelerator when executing the second task.

According to the task scheduling method provided in the embodiment of the present disclosure, the third task scheduler schedules the second accelerator based on the second scheduling information and the third scheduling information, to execute the second task (the next task for the first task). After the execution is completed, the second task is used as a new first task. The foregoing steps are repeated to schedule and execute all the tasks in the task set. During the execution of each task in the task set, the scheduling is performed between a plurality of task schedulers to schedule respective accelerators to execute respective tasks, without the main grogram being interrupted by the processor. In this way, frequency of processor interruptions is reduced, thereby improving system processing performance.

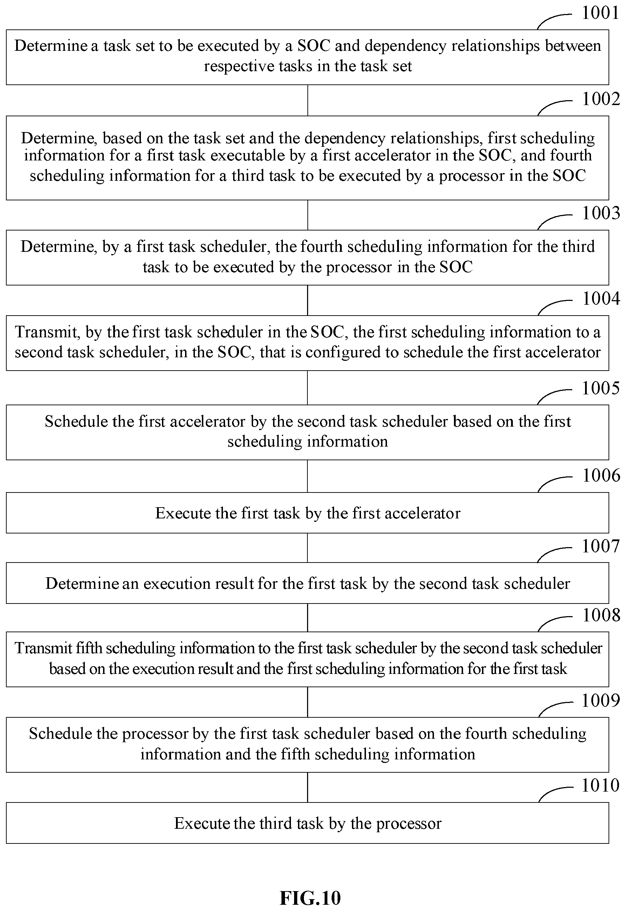

After the second task scheduler obtains the execution result for the first task that is transmitted by the first accelerator, if it is determined based on the first scheduling information that the consequent task for the first task is a special task to be executed by the processor, the second task scheduler needs to schedule the first task scheduler, which schedules the processor to execute the special task. On the basis of the foregoing embodiment, an embodiment of the present disclosure provides another task scheduling method. FIG. 10 is a schematic flowchart of a task scheduling method according to a further exemplary embodiment of the present disclosure. As shown in FIG. 10, the method includes the following steps.

Step 1001. Determine a task set to be executed by a SOC and dependency relationships between respective tasks in the task set.

Step 1002. Determine, based on the task set and the dependency relationships, first scheduling information for a first task executable by a first accelerator in the SOC, and fourth scheduling information for a third task to be executed by a processor in the SOC.

It is taken as an example that the first task is the task 1 in the task set shown in FIG. 4. In a data packet corresponding to the first scheduling information, a source indicates the first task scheduler, a target indicates the second task scheduler, associated tasks include {null} and {task 2 and task 3}, a task numbering indicates task 1, and static parameters include a storage address of static operation data required for executing the task 1 in a memory.

It is taken as an example that the third task is the task 3 in the task set shown in FIG. 4. In a data packet corresponding to the fourth scheduling information, a source indicates the processor, a target indicates the first task scheduler, associated tasks include {task 1} and {task 4}, a task numbering indicates task 3, and static parameters include a storage address of static operation data required for executing the task 3 in the memory.

Step 1003. Determine, by a first task scheduler, the fourth scheduling information for the third task to be executed by the processor in the SOC.

The first task scheduler receives the first scheduling information and the fourth scheduling information transmitted by the processor through a configuration bus.

Step 1004. Transmit, by the first task scheduler in the SOC, the first scheduling information to a second task scheduler, in the SOC, that is configured to schedule the first accelerator.

Step 1005. Schedule the first accelerator by the second task scheduler based on the first scheduling information.

Step 1006. Execute the first task by the first accelerator.

Step 1007. Determine an execution result for the first task by the second task scheduler.

Step 1008. Transmit fifth scheduling information to the first task scheduler by the second task scheduler based on the execution result and the first scheduling information for the first task.

The second task scheduler determines, based on the first scheduling information, that a consequent task for the first task is a special task to be executed by the processor. After the execution result for the first task that is transmitted back by the first accelerator is obtained, the fifth scheduling information for scheduling the first task scheduler is generated based on the execution result and the first scheduling information for the first task. Taking the task 3 in the task set shown in FIG. 4 as an example, the task 3 in the consequent tasks for the task 1 is a special task. In a data packet corresponding to the fifth scheduling information generated by the second task scheduler, a source indicates the second task scheduler, a target indicates the first task scheduler, a task numbering indicates task 3, and dynamic parameters include a storage address of the execution result for the task 1 in the memory.

Step 1009. Schedule the processor by the first task scheduler based on the fourth scheduling information and the fifth scheduling information.

The first task scheduler parses the received fourth scheduling information to determine a task type and static parameters for the task 3. The first task scheduler parses the received fifth scheduling information to determine the static parameters of the task 3. Configuration information for the task 3 is generated based on the task type, the static parameters, and dynamic parameters of the task 3. Based on the configuration information for the task 3, the processor is scheduled to execute the task 3.

Step 1010. Execute the third task by the processor.

After executing the third task to obtain an execution result for the third task, the processor transmits the execution result for the third task back to the first task scheduler.

The first task scheduler determines, based on the fourth scheduling information, that a consequent task for the third task is a fourth task to be executed by a third accelerator. After the execution result for the third task that is transmitted back by the processor is obtained, sixth scheduling information for scheduling a fourth task scheduler is generated based on the execution result and the fourth scheduling information for the third task. Subsequent execution steps are similar to Steps 1004 to 1010, and details are not described herein.

According to the task scheduling method provided in the embodiments of the present disclosure, the first task scheduler may not only schedule other task schedulers, but may also schedule the processor to execute the special tasks inexecutable by the accelerators, thereby scheduling and executing the special tasks. When scheduling other task schedulers, the first task scheduler schedules and executes tasks executable by the accelerators. When scheduling the processor, the first task scheduler schedules and executes tasks inexecutable by the accelerators. In this way, it is implemented that different types of tasks are scheduled through hardware, which may improve flexibility of task scheduling.

### Exemplary Apparatus

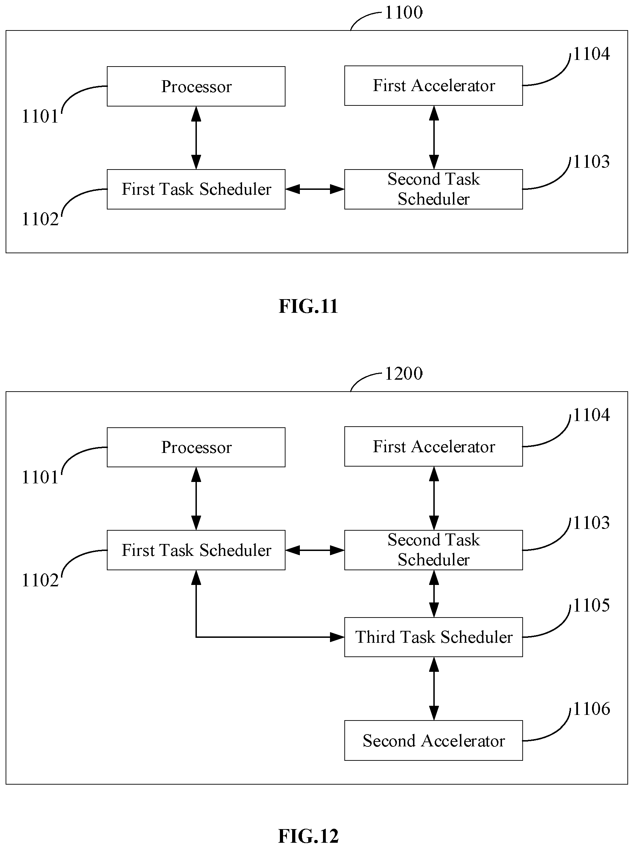

FIG. 11 is a schematic diagram of a structure of a SOC according to an exemplary embodiment of the present disclosure. As shown in FIG. 11, a SOC 1100 includes a processor 1101, a first accelerator 1104, a first task scheduler 1102, and a second task scheduler 1103. The processor 1101 is coupled to the second task scheduler 1103 through the first task scheduler 1102, and the second task scheduler 1103 is coupled to the first accelerator 1104.

The processor 1101 is configured to determine a task set to be executed by the SOC 1100 and dependency relationships between respective tasks in the task set; and to determine, based on the task set and the dependency relationships, initial scheduling information for a first task executable by the first accelerator 1104.

The first task scheduler 1102 is configured to determine first scheduling information for the first task based on the initial scheduling information, and transmit the first scheduling information to the second task scheduler 1103 configured to schedule the first accelerator 1104.

The second task scheduler 1103 is configured to schedule the first accelerator 1104 based on the first scheduling information.

The first accelerator 1104 is configured to execute the first task.

In some examples, the processor 1101 is further configured to: determine the first task executable by the first accelerator 1104 from the task set; determine, based on the dependency relationships, an associated task having a dependency relationship with the first task from the task set; and determine the initial scheduling information for the first task based on the first task and the associated task.

The first task scheduler 1102 is further configured to determine the first scheduling information for the first task based on the initial scheduling information for the first task.

In some examples, the second task scheduler 1103 is further configured to: determine, based on the first scheduling information, that the first task meets a task execution condition; parse the first scheduling information to determine first configuration information required for executing the first task; and schedule the first accelerator based on the first configuration information.

FIG. 12 is a schematic diagram of a structure of a SOC according to another exemplary embodiment of the present disclosure. As shown in FIG. 12, on the basis of the SOC 1100 shown in FIG. 11, the SOC 1100 further includes a second accelerator 1106 and a third task scheduler 1105 for scheduling the second accelerator 1106. The first task scheduler 1102 is coupled to the second accelerator 1106 through the third task scheduler 1105.

The third task scheduler 1105 is configured to determine second scheduling information for a second task executable by the second accelerator 1106.

The second task scheduler 1103 is further configured to determine an execution result for the first task; and transmit third scheduling information to the third task scheduler 1105 based on the execution result and the first scheduling information for the first task.

The third task scheduler 1105 is further configured to schedule the second accelerator 1106 based on the second scheduling information and the third scheduling information.

The second accelerator 1106 is configured to execute the second task, where the second task is a next task for the first task.

In some examples, the third task scheduler 1105 is further configured to determine an antecedent task having a dependency relationship with the second task based on the second scheduling information; determine an execution result for the antecedent task based on the third scheduling information; and schedule the second accelerator 1106 based on the execution result for the antecedent task and the second scheduling information.

In some examples, the third task scheduler 1105 is further configured to: parse the second scheduling information to determine second configuration information required for executing the second task; and schedule the second accelerator 1106 based on the execution result for the antecedent task and the second configuration information.

In some examples, the first task scheduler 1102 is further configured to determine fourth scheduling information for a third task to be executed by the processor in the SOC.

The second task scheduler 1103 is further configured to determine the execution result for the first task; and transmit fifth scheduling information to the first task scheduler 1102 based on the execution result and the first scheduling information for the first task.

The first task scheduler 1102 is further configured to schedule the processor 1101 based on the fourth scheduling information and the fifth scheduling information.

The processor 1101 is further configured to execute the third task.

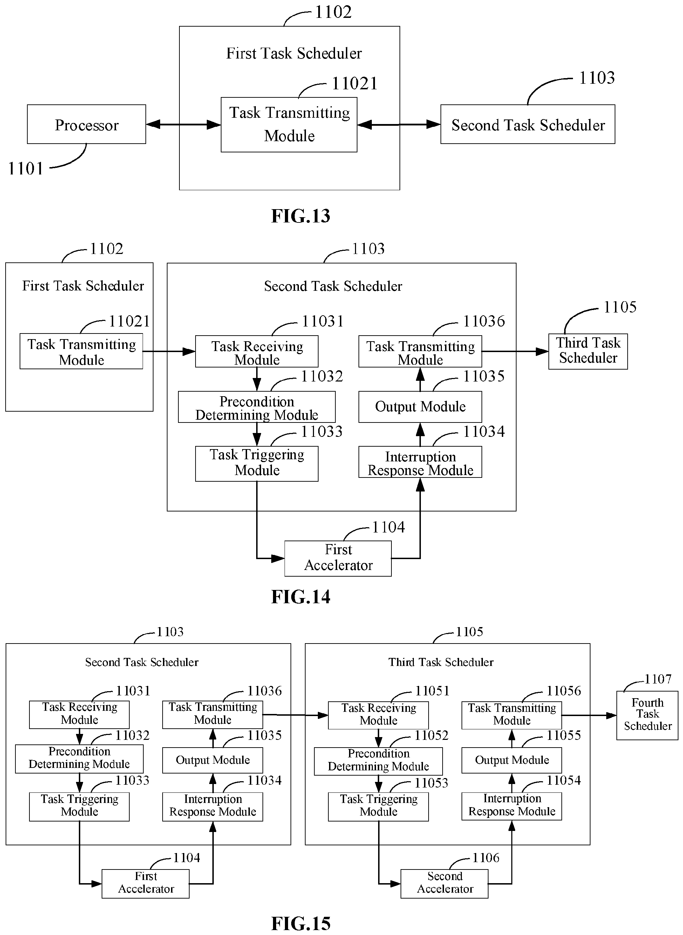

FIG. 13 is a schematic diagram of a structure of a first task scheduler according to an exemplary embodiment of the present disclosure. As shown in FIG. 13, the first task scheduler 1102 includes a task transmitting module 11021.

The task transmitting module 11021 is coupled to the processor 1101 and a scheduling bus, respectively. In the SOC 1100 shown in FIG. 11, the task transmitting module 11021 is configured to receive the initial scheduling information for the first task that is transmitted by the processor 1101; determine the first scheduling information based on the initial scheduling information for the first task; and transfer the first scheduling information to the second task scheduler 1103 through the scheduling bus. In a SOC 1200 shown in FIG. 12, the task transmitting module 11021 is configured to receive the initial scheduling information for the first task and initial scheduling information for the second task that are transmitted by the processor 1101; determine the first scheduling information based on the initial scheduling information for the first task; determine the second scheduling information based on the initial scheduling information for the second task; and transfer the first scheduling information to the second task scheduler 1103 and transfer the second scheduling information to the third task scheduler 1105 through the scheduling bus.

FIG. 14 is a schematic diagram of a structure of a second task scheduler according to an exemplary embodiment of the present disclosure. As shown in FIG. 14, the second task scheduler 1103 includes a task receiving module 11031, a precondition determining module 11032, and a task triggering module 11033 that are sequentially coupled, and an interruption response module 11034, an output module 11035, and a task transmitting module 11036 that are sequentially coupled. The task receiving module 11031 and the task transmitting module 11036 are both coupled to the scheduling bus, and are coupled to another task scheduler (the third task scheduler 1105 is shown in FIG. 14 as an example) through the scheduling bus. The task triggering module 11033 and the interruption response module 11034 are both coupled to the first accelerator 1104.

The task receiving module 11031 is configured to receive the first scheduling information from the scheduling bus. The first scheduling information is scheduling information transmitted by the task transmitting module 11021 in the first task scheduler 1102 shown in FIG. 13.

The precondition determining module 11032 is configured to determine, based on the first scheduling information, whether the first task meets the task execution condition. The first task may be triggered only when meeting the task execution condition. In an implementation, when the first task is a first one of tasks to-be-executed in the task set, there are no dependent antecedent tasks for the first task, and it is determined that the first task meets the task execution condition. When the first task is not the first one of the tasks to-be-executed in the task set, there are dependent antecedent tasks for the first task; and if all antecedent tasks on which the first task is dependent have been executed, it is determined that the first task meets the task execution condition.

The task triggering module 11033 is configured to convert the first task that meets the task execution condition into configuration information corresponding to the first accelerator 1104. The first accelerator 1104 executes the first task based on the configuration information. In an implementation, the first scheduling information may be parsed by the task triggering module 11033, to determine the first configuration information required for executing the first task. The first configuration information is the configuration information corresponding to the first accelerator 1104.

The interruption response module 11034 is configured to perform local processing on interruptions of the first accelerator 1104, to convert the interruptions into a processing result, as the execution result for the first task.

The output module 11035 is configured to generate third scheduling information based on the execution result and the first scheduling information for the first task. The third scheduling information is used to trigger a post-stage task scheduler.

The task transmitting module 11036 is configured to transmit the third scheduling information to the scheduling bus.

FIG. 15 is a schematic diagram of a structure of a third task scheduler according to an exemplary embodiment of the present disclosure. As shown in FIG. 15, the third task scheduler 1105 includes a task receiving module 11051, a precondition determining module 11052, and a task triggering module 11053 that are sequentially coupled, and an interruption response module 11054, an output module 11055, and a task transmitting module 11056 that are sequentially coupled. The task receiving module 11051 and the task transmitting module 11056 are both coupled to the scheduling bus, and are coupled to another task scheduler (a fourth task scheduler 1107 is shown in FIG. 15 as an example) through the scheduling bus. The task triggering module 11053 and the interruption response module 11054 are both coupled to the second accelerator 1106.

The task receiving module 11051 is configured to receive the second scheduling information and the third scheduling information from the scheduling bus. The second scheduling information is the scheduling information transmitted by the task transmitting module 11021 in the first task scheduler 1102 shown in FIG. 13. The third scheduling information is scheduling information transmitted by the task transmitting module 11036 in the second task scheduler 1103 shown in FIG. 14.

The precondition determining module 11052 is configured to determine, based on the second scheduling information, whether the second task meets the task execution condition. The second task may be triggered only when meeting the task execution condition. In an implementation, if execution results for all the antecedent tasks on which the second task is dependent are received, and it is determined that all the antecedent tasks on which the second task is dependent have been executed, it is determined that the second task meets the task execution condition. It may be determined, by parsing scheduling information transmitted by a pre-stage task scheduler, whether the execution result for the antecedent task is received. For example, when the third scheduling information including the execution result for the first task is received, it is determined that the first task on which the second task is dependent has been executed. If the second task only is dependent on the first task, it may be determined that the antecedent task on which the second task is dependent has been executed. If the second task is also dependent on other tasks in addition to the first task, it is also needed to determine whether scheduling information including execution results for other tasks has been received.

The task triggering module 11053 is configured to convert the second task that meets the task execution condition into configuration information corresponding to the second accelerator 1106. The second accelerator 1106 executes the second task based on the configuration information. In an implementation, the second scheduling information may be parsed by the task triggering module 11053, to determine the second configuration information required for executing the second task. The second configuration information and the execution results for all the antecedent tasks for the second task are taken as the configuration information corresponding to the first accelerator 1106.

The interruption response module 11054 is configured to perform local processing on interruptions of the second accelerator 1106, to convert the interruptions into a processing result, as the execution result for the second task.

The output module 11055 is configured to generate post-stage scheduling information based on the execution result for the second task and the third scheduling information. The post-stage scheduling information is used to trigger a post-stage task scheduler. In some examples, when there is a consequent task that is dependent on the second task, the post-stage scheduling information is used to schedule the post-stage task scheduler. The post-stage task scheduler is configured to schedule a task scheduler of a post-stage accelerator. The post-stage accelerator is an accelerator capable of executing the consequent task for the second task. It should be noted that there may be one or more consequent tasks for the second task. When there is no consequent task that is dependent on the second task, the post-stage scheduling information is used to schedule the first task scheduler 1102, so that the first task scheduler 1102 transmits the execution result for the second task to the processor 1101.

The task transmitting module 11056 is configured to transmit the post-stage scheduling information to the scheduling bus.

In some examples, when there is a special task (which is referred to as a third task below) in the task set, which is inexecutable by a hardware accelerator and needs to be executed by the processor 1101, the first task scheduler 1102 is further configured to schedule the processor 1101, so that the processor 1101 executes the third task.

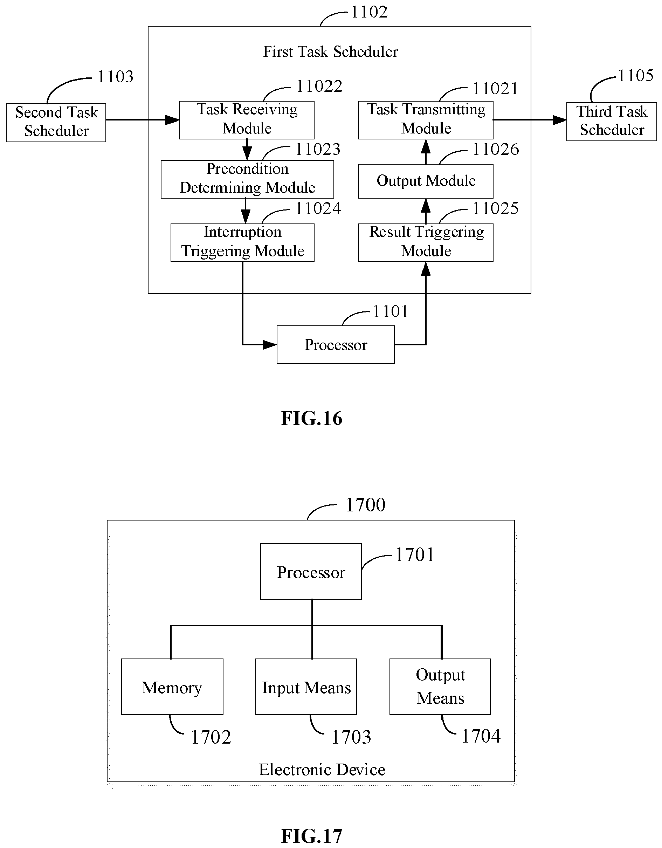

FIG. 16 is a schematic diagram of a structure of a first task scheduler according to another exemplary embodiment of the present disclosure. As shown in FIG. 16, the first task scheduler 1102 includes a task transmitting module 11021, a task receiving module 11022, a precondition determining module 11023, an interruption triggering module 11024, a result triggering module 11025, and an output module 11026. The task transmitting module 11021 and the task receiving module 11022 are coupled to the scheduling bus, and are coupled to other task schedulers (the second task scheduler 1103 and the third task scheduler 1105 are shown in FIG. 16 as an example) through the scheduling bus. The task transmitting module 11021, the interruption triggering module 11024, and the result triggering module 11025 are all coupled to the processor 1101.

The task receiving module 11022 is configured to receive the fifth scheduling information for the third task from the processor 1101, and is further configured to receive the fourth scheduling information from the scheduling bus. The fourth scheduling information is scheduling information transferred to the scheduling bus by a task scheduler corresponding to an antecedent task on which the third task is dependent.

The precondition determining module 11023 is configured to determine, based on the fifth scheduling information, whether the third task meets the task execution condition. The third task may be triggered only when all antecedent tasks on which the third task is dependent have been executed and it is determined that the third task meets the task execution condition.

The interruption triggering module 11024 is configured to convert the third task that meets the task execution condition into interruption configuration information corresponding to the processor 1101. The processor 1101 executes the third task based on the interruption configuration information. In an implementation, the fourth scheduling information may be parsed by the interruption triggering module 11024, to determine the third configuration information required for executing the third task. The third configuration information and execution results for all the antecedent tasks for the third task are taken as the interruption configuration information corresponding to the processor 1101.

The result triggering module 11025 is configured to receive a trigger of the processor 1101 to obtain an execution result for the third task executed by the processor 1101.

The output module 11026 is configured to generate post-stage scheduling information based on the execution result for the third task and the fifth scheduling information. The post-stage scheduling information is used to trigger a post-stage task scheduler.

The task transmitting module 11021 is further configured to transmit the post-stage scheduling information to the scheduling bus. The post-stage scheduling information is transferred to the post-stage task scheduler through the scheduling bus.

It should be noted that the description about the exemplary embodiments of the apparatus is similar to the description about the method, and has same beneficial effects as the exemplary embodiments corresponding to the method. For technical details that are not disclosed in the exemplary embodiments of the apparatus in the present disclosure and corresponding beneficial technical effects, a person skilled in the art should refer to the description about the exemplary embodiments of the method in the present disclosure for understanding. Details are not described herein again.

### Exemplary Electronic Device

FIG. 17 is a schematic diagram of a structure of an electronic device according to an embodiment of the present disclosure. An electronic device 1700 includes at least one processor 1701 and a memory 1702.

The processor 1701 may be a central processing unit (CPU) or another form of processing unit having a data processing capability and/or an instruction execution capability, and may control another component in the electronic device 1700 to perform a desired function.

The memory 1702 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1701 may execute one or more of the program instructions to implement the task scheduling method according to the embodiments of the present disclosure that are described above and/or other desired functions.

In an example, the electronic device 1700 may further include an input means 1703 and an output means 1704. These components are connected to each other through a bus system and/or another form of connection mechanism (not shown).

The input means 1703 may further include, for example, a keyboard and a mouse.

The output means 1704 may output various information to the outside. The output means 1704 may include, for example, a display, a speaker, a printer, a communication network, and a remote output means connected by the communication network.

Certainly, for simplicity, FIG. 17 shows only some of components in the electronic device 1700 that are related to the present disclosure, and components such as a bus and an input/output interface are omitted. In addition, according to specific application situations, the electronic device 1700 may further include any other appropriate components.

### Exemplary Computer Program Product And Computer Readable Storage Medium

In addition to the foregoing method and devices, the embodiments of the present disclosure may also provide a computer program product, which includes computer program instructions. When the computer program instructions are run by a processor, the processor is enabled to perform the steps, of the SOC-based task scheduling method according to the embodiments of the present disclosure, that are described in the "exemplary method" part described above.

The computer program product may be program code, written with one or any combination of a plurality of programming languages, configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, which stores computer program instructions. When the computer program instructions are run by a processor, the processor is enabled to perform the steps, of the SOC-based task scheduling method according to the embodiments of the present disclosure, that are described in the "exemplary method" part described above.

The computer readable storage medium may be one readable medium or any combination of a plurality of readable media. The readable medium may be a readable signal medium or a readable storage medium. The readable storage medium includes, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of the present disclosure are described above in combination with specific embodiments. However, advantages, superiorities, and effects mentioned in the present disclosure are merely examples but are not for limitation, and it cannot be considered that these advantages, superiorities, and effects are necessary for each embodiment of the present disclosure. In addition, specific details described above are merely for examples and for ease of understanding, rather than limitations. The details described above do not limit that the present disclosure must be implemented by the foregoing specific details.

A person skilled in the art may make various modifications and variations to the present disclosure without departing from the spirit and the scope of the present application. In this way, if these modifications and variations of the present application fall within the scope of the claims and equivalent technologies of the claims of the present disclosure, the present disclosure also intends to include these modifications and variations.

## Claims

1. A SOC-based (System-On-Chip-based) task scheduling method, including:
determining a task set to be executed by the SOC and dependency relationships between respective tasks in the task set;
determining, based on the task set and the dependency relationships, first scheduling information for a first task executable by a first accelerator in the SOC;
transmitting, by a first task scheduler in the SOC, the first scheduling information to a second task scheduler, in the SOC, that is configured to schedule the first accelerator; and
scheduling the first accelerator by the second task scheduler based on the first scheduling information, and executing the first task by the first accelerator.

2. The method according to claim 1, wherein the determining, based on the task set and the dependency relationships, first scheduling information for a first task executable by a first accelerator in the SOC includes:
determining the first task executable by the first accelerator from the task set;
determining, based on the dependency relationships, an associated task having a dependency relationship with the first task from the task set; and
determining the first scheduling information for the first task based on the first task and the associated task.

3. The method according to claim 1, wherein the scheduling the first accelerator by the second task scheduler based on the first scheduling information includes:
determining, based on the first scheduling information, that the first task meets a task execution condition;
parsing the first scheduling information by the second task scheduler to determine first configuration information required for executing the first task; and
scheduling the first accelerator by the second task scheduler based on the first configuration information.

4. The method according to any one of claims 1 to 3, further including:
determining, by a third task scheduler in the SOC, second scheduling information for a second task executable by a second accelerator in the SOC, wherein the third task scheduler is configured to schedule the second accelerator;
determining an execution result for the first task by the second task scheduler;
transmitting third scheduling information to the third task scheduler by the second task scheduler based on the execution result and the first scheduling information for the first task; and
scheduling the second accelerator by the third task scheduler based on the second scheduling information and the third scheduling information, and executing the second task by the second accelerator, wherein the second task is a next task for the first task.

5. The method according to claim 4, wherein the scheduling the second accelerator by the third task scheduler based on the second scheduling information and the third scheduling information includes:
determining, by the third task scheduler, an antecedent task having a dependency relationship with the second task based on the second scheduling information;
determining an execution result for the antecedent task based on the third scheduling information; and
scheduling the second accelerator by the third task scheduler based on the execution result for the antecedent task and the second scheduling information.

6. The method according to claim 5, wherein the scheduling the second accelerator by the third task scheduler based on the execution result for the antecedent task and the second scheduling information includes:
parsing the second scheduling information by the third task scheduler to determine second configuration information required for executing the second task; and
scheduling the second accelerator by the third task scheduler based on the execution result for the antecedent task and the second configuration information.

7. The method according to any one of claims 1 to 3, further including:
determining, by the first task scheduler, fourth scheduling information for a third task to be executed by a processor in the SOC;
determining an execution result for the first task by the second task scheduler;
transmitting fifth scheduling information to the first task scheduler by the second task scheduler based on the execution result and the first scheduling information for the first task; and
scheduling the processor by the first task scheduler based on the fourth scheduling information and the fifth scheduling information, and executing the third task by the processor.

8. A SOC (System On Chip), including a processor, a first accelerator, a first task scheduler, and a second task scheduler, wherein the processor is coupled to the second task scheduler through the first task scheduler, and the second task scheduler is coupled to the first accelerator;
the processor is configured to determine a task set to be executed by the SOC and dependency relationships between respective tasks in the task set; and to determine, based on the task set and the dependency relationships, initial scheduling information for a first task executable by the first accelerator;
the first task scheduler is configured to determine first scheduling information for the first task based on the initial scheduling information, and transmit the first scheduling information to the second task scheduler configured to schedule the first accelerator;
the second task scheduler is configured to schedule the first accelerator based on the first scheduling information; and
the first accelerator is configured to execute the first task.

9. The SOC according to claim 8, wherein the processor is further configured to:
determine the first task executable by the first accelerator from the task set;
determine, based on the dependency relationships, an associated task having a dependency relationship with the first task from the task set; and
determine the first scheduling information for the first task based on the first task and the associated task.

10. The SOC according to claim 8, wherein the second task scheduler is further configured to:
determine, based on the first scheduling information, that the first task meets a task execution condition;
parse the first scheduling information to determine first configuration information required for executing the first task; and
schedule the first accelerator based on the first configuration information.

11. The system according to any one of claims 8 to 10, further including a second accelerator and a third task scheduler configured to schedule the second accelerator, wherein the first task scheduler is coupled to the second accelerator through the third task scheduler;
the third task scheduler is configured to determine second scheduling information for a second task executable by the second accelerator;
the second task scheduler is further configured to determine an execution result for the first task, and transmit third scheduling information to the third task scheduler based on the execution result and the first scheduling information for the first task;
the third task scheduler is further configured to schedule the second accelerator based on the second scheduling information and the third scheduling information; and
the second accelerator is configured to execute the second task, wherein the second task is a next task for the first task.

12. The SOC according to claim 11, wherein the third task scheduler is further configured to:
determine an antecedent task having a dependency relationship with the second task based on the second scheduling information;
determine an execution result for the antecedent task based on the third scheduling information; and
schedule the second accelerator based on the execution result for the antecedent task and the second scheduling information.

13. The SOC according to any one of claims 8 to 10, wherein:
the first task scheduler is further configured to determine fourth scheduling information for a third task to be executed by a processor in the SOC;
the second task scheduler is further configured to determine an execution result for the first task, transmit fifth scheduling information to the first task scheduler based on the execution result and the first scheduling information for the first task; and
the first task scheduler is further configured to schedule the processor based on the fourth scheduling information and the fifth scheduling information, so that the processor executes the third task.

14. A computer readable storage medium, in which a computer program is stored, wherein the computer program is used for implementing the SOC-based task scheduling method according to any one of claims 1 to 7.

15. An electronic device, including:
a processor; and
a memory, configured to store a processor-executable instruction, wherein
the processor is configured to read the instruction from the memory, and execute the instruction to implement the SOC-based task scheduling method according to any one of claims 1 to 7.
